# EUROPEAN PATENT SPECIFICATION

(11) **EP 3 459 914 B1**
(45) Date of publication and mention of the grant of the patent: **11.09.2024**
(21) Application number: 18196847.0
(22) Date of filing: 26.09.2018
(51) Int. Cl.: C03C 3/066, C03C 3/093, C03C 8/04

(54) **GLASS FRIT COMPOSITION AND COOKING APPLIANCE**
GLASFRITTENZUSAMMENSETZUNG UND KOCHGERÄT
COMPOSITION DE FRITTE DE VERRE ET APPAREIL DE CUISSON

(30) Priority: 26.09.2017 KR 20170124098
(43) Date of publication of application: 27.03.2019
(73) Proprietor: LG Electronics Inc., Yeongdeungpo-gu Seoul 07336 (KR)
(72) Inventor: KIM, Namjin, 08592 Seoul (KR); KIM, Youngseok, 08592 Seoul (KR)
(74) Representative: Vossius & Partner Patentanwälte Rechtsanwälte mbB

(56) References cited:
- DE-C1- 19 512 847
- FR-A1- 2 363 173
- US-A- 4 084 975
- US-A- 4 493 900
- US-A- 5 306 674
- US-A1- 2011 262 758

## Description

### BACKGROUND OF THE INVENTION

### Field of the Invention

Embodiments relate to a glass frit and a cooking appliance using the glass frit.

### Description of the Related Art

Enamel is a substance formed by plating glass glaze to the surface of a metal plate. Common enamel is used for cooking appliances such as a microwave and an oven. Enamel is classified into acid resistant enamel that prevents oxidation, heat resistant enamel that can resist high temperature, etc., depending on the kind and the use of glaze. Further, enamel is classified into aluminum enamel, zirconium enamel, titanium enamel, soda glass enamel, etc., depending on the materials that are added to the enamel.

For the enamel, an enamel substance, that is, a glass frit is manufactured, glass powder is formed by powdering the glass frit through a dry or wet process, and then the glass powder is coated on an object to be coated, whereby an enamel layer can be formed.

The enamel layer can be formed by coating an object and then performing a sintering process at a predetermined temperature.

The material of objects on which an enamel layer is formed may be limited, depending on the required sintering temperature, and as the sintering temperature is increased, the process efficiency and the process cost are increased. US 4 084 975 A, US 5 306 674 A and US 4 493 900 A disclose glass frit compositions.

Accordingly, there is a need for a glass composition that can solve these problems and can reduce a sintering temperature.

### SUMMARY OF THE INVENTION

Embodiments of the invention provide a glass frit having a low sintering temperature.

A glass frit according to the invention is according with claim 1.

The glass frit according to the invention has a low sintering temperature e.g. when it is coated on a low-carbon steel sheet.

In detail, the glass frit according to the invention may be sintered at 700°C to 750°C e.g. after being spray-coated on a low-carbon steel sheet.

That is, the glass frit according to the invention can form a functional layer on a low-carbon steel sheet by being sintered at 700°C to 750°C and can have a coefficient of thermal expansion, a softening temperature, and adhesion similar to those of a functional layer that is coated in a high-temperature process.

Therefore, the glass frit according to the invention can be coated on a low-carbon steel sheet by sintering at a low temperature and the process temperature can be decreased, so the process efficiency can be improved.

Further, since the glass frit can be sintered at a low temperature, it can be coated on various materials such as aluminum and SUS, and the materials on which the glass frit can be coated may include materials on which sintering needs to be carried out at a low temperature, so it is possible to use various base materials.
In accordance with a further embodiment, the invention provides a cooking appliance comprising a functional layer on a metallic base material, which functional layer is formed by sintering a glass frit in accordance with the invention.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a front view of a cooking appliance according to an embodiment;
FIGS. 2 and 3 are enlarged cross-sectional views showing a portion of the inner side of a cavity of FIG. 1; and
FIGS. 4 and 5 are enlarged cross-sectional views showing a portion of the rear side of a door of FIG. 1.

### DETAILED DESCRIPTION OF THE INVENTION

The glass frit according to the invention and a cooking appliance using the glass frit are described hereafter with reference to the drawings.

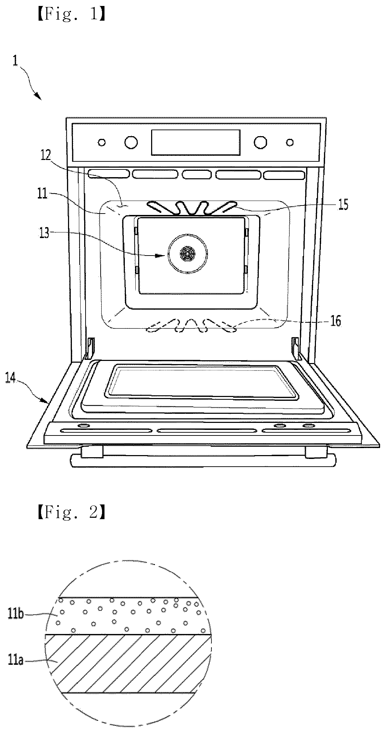

FIG. 1 is a front view of a cooking appliance according to an embodiment.

Referring to FIG. 1, a cooking appliance 1 includes a cavity 11 having a cooking chamber 12, a door 14 selectively opening/closing the cooking chamber 12, and at least one heating source providing heat for heating an object to be cooked in the cooking chamber 12.

In detail, the cavity 11 may have a hexahedral shape with an open front. The heating source may include a convection assembly 13 for discharging heated air into the cavity 11, a top heater 15 disposed at an upper portion in the cavity 11, and a bottom heater 16 disposed at a lower portion in the cavity 11. Obviously, it is not necessary for the heating source to include the convection assembly 13, the top heater 15, and the bottom heater 16. That is, the heating source may include at least any one of the convection assembly 13, the top heater 15, and the bottom heater 16.

The top heater 15 and the bottom heater 16 may be disposed inside or outside the cavity 11.

Referring to FIGS. 2 to 5, functional layers may be disposed on the inner side of the cavity 11 and the rear side of the door 14.

The functional layers are formed by sintering a glass frit to be described below. The functional layers may be coated on the inner side of the cavity 11 and the rear side of the door 14. That is, the functional layers may be coating layers.

The functional layers improve heat resistance, chemical resistance, and contamination resistance of the inner side of the cavity 11 and the rear side of the door 14.

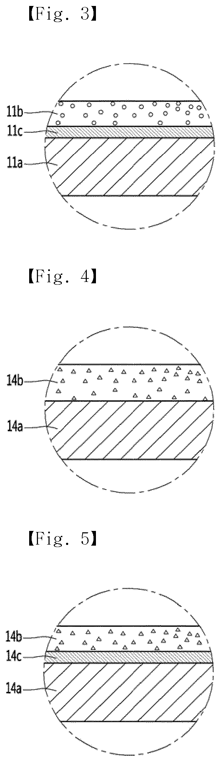

Referring to FIGS. 2 and 3, a functional layer may be disposed in the cavity.

The cavity 11 may include a metal layer 11a and a functional layer 11b on the metal layer 11a.

The metal layer 11a may be a base material of the cavity, e.g. a base material including low carbon steel. As used herein, the term "low carbon steel" refers to steel with a carbon content of typically 0.3 wt% or less, based on the total weight of the steel.

Referring to FIG. 2, the functional layer 11b may be in direct contact with the metal layer 11a.

Referring to FIG. 3, the functional layer 11b may be in indirect contact with the metal layer 11a. In detail, a buffer layer 11c may be disposed between the metal layer 11a and the functional layer 11b. The buffer layer 11c may include a bonding layer. That is, the bonding force between the metal layer 11a and the functional layer 11b can be improved by the buffer layer 11c.

Referring to FIGS. 4 and 5, a functional layer may be disposed on the rear side of the door 14. In detail, a functional layer may be disposed on the rear side, which faces the cooking chamber 12, of the door 14 when the cooking chamber 12 is closed. The functional layer can improve heat resistance, chemical resistance, and contamination resistance of the rear side of the door 14.

The door 14 may include a metal layer 14a and a functional layer 14b on the metal layer 14a.

The metal layer 14a may be a base material of the door, e.g. a base material including low carbon steel.

Referring to FIG. 4, the functional layer 14b may be in direct contact with the metal layer 14a.

Alternatively, referring to FIG. 5, the functional layer 14b may be in indirect contact with the metal layer 14a. In detail, a buffer layer 14c may be disposed between the metal layer 14a and the functional layer 14b. The buffer layer 14c may include a bonding layer. That is, the bonding force between the metal layer 14a and the functional layer 14b can be improved by the buffer layer 14c.

The functional layers may be formed by coating the glass frit on the inner side of the cavity 11 or the rear side of the door 14, and sintering the glass frit. Preferably, the functional layers are coated on the inner side of the cavity 11 and the rear side of the door 14, whereby they can improve heat resistance, chemical resistance, and contamination resistance of the inner side of the cavity 11 and the rear side of the door 14.

The glass frit in accordance with the invention that may be coated on at least one of the cavity and the door of the cooking appliance is described hereafter.

SiO₂ is included by 15 wt% to 50 wt% of the entire glass frit.

SiO₂ is included in the glass frit, thereby being able to form a glass structure of the glass frit, improve the framework of the glass structure, and improve acid resistance of the glass frit.

When SiO₂ is included in an amount of less than 15 wt% of the entire glass frit, the glass structure of the glass frit may be deteriorated, so durability of a functional layer may be reduced. When SiO₂ is included in an amount of more than 50 wt% of the entire glass frit, the sintering temperature of the glass frit may be increased.

B₂O₃ is included by 10 wt% to 30 wt% of the entire glass frit.

B₂O₃ can increase a vitrification area of the glass frit and can appropriately adjust the coefficient of thermal expansion of the glass frit. Further, B₂O₃ can provide sufficient fusion flow in a sintering process of the glass frit by reducing the viscosity of the glass frit.

That is, B₂O₃ can reduce a contact angle at a high temperature and can improve propagation and fluidity in a sintering process of the glass frit, so high adhesion can be maintained even at a low temperature.

When B₂O₃ is included in an amount of less than 10 wt% of the entire glass frit, the vitrification area may be reduced and the glass structure is deteriorated, so durability of a functional layer may be reduced. When B₂O₃ is included in an amount of more than 30 wt% of the entire glass frit, the sintering temperature of the glass frit may be increased.

The I-group oxide is an oxide of an element of the first group of the periodic table, i.e. an oxide of an alkali metal. In detail, the glass frit includes all of Li₂O, Na₂O, and K₂O.

The I-group oxide is included 10 wt% to 30 wt% of the entire glass frit.

The I-group oxide can reduce the sintering temperature of the glass frit by being included in the glass composition. In detail, the I-group oxide can sufficiently reduce thermal properties of the glass composition, so the glass composition can be sintered at a low temperature.

When the I-group oxide is included in an amount of less than 10 wt% of the entire glass frit, the sintering temperature of the glass frit may increase. When the I-group oxide is included in an amount of more than 30 wt% of the entire glass frit, the coefficient of thermal expansion of the glass frit may be increased, so a bonding force may be reduced due to the difference from the coefficient of thermal expansion of the base material.

ZnO is included by 5 wt% to 35 wt% of the entire glass frit.

ZnO can reinforce the glass structure of the glass frit by being included in the glass frit.

ZnO can function as an intermediate for keeping balance between SiO₂ and the I-group oxide. In detail, ZnO can function as an intermediate for keeping balance between SiO₂ and B₂O₃ that function as a network former and the I-group oxide that functions as a network modifier.

When ZnO is included in an amount of less than 5 wt% of the entire glass frit, the glass structure of the glass composition may be deteriorated, so durability of a functional layer may be reduced. When ZnO is included in an amount of more than 35 wt% of the entire glass frit, the crystallization of glass may occur.

The glass frit further includes all of Al₂O₃, ZrO₂, and TiO₂.

Any one of Al₂O₃, ZrO₂, and TiO₂ is included by 0.1 wt% to 5 wt% of the entire glass frit.

Al₂O₃ and ZrO₂ can improve chemical resistance and durability of the glass frit by being included in the glass frit. In particular, Al₂O₃ and ZrO₂ can supplement low chemical durability of an alkali phosphated glass structure formed by P₂O₅, Na₂O, and K₂O, through structural stabilization.

TiO₂ can improve hiding power of the glass composition according to an embodiment. That is, the hiding power of the coating layer of a glass composition on the function layers can be improved by TiO₂.

When Al₂O₃, ZrO₂, and TiO₂ are included in an amount of less than 0.1 wt% of the entire glass frit, chemical resistance and durability of the glass composition may be reduced and the hiding power of the glass composition may be deteriorated, so when the glass composition is coated on a buffer layer, the color of the buffer layer may be shown to the outside. When Al₂O₃, ZrO₂ and TiO₂ are included in an amount of more than 5 wt% of the entire glass frit, the sintering temperature of the glass frit may be increased and accordingly the process efficiency may be decreased.

The glass frit further includes a fluorine compound. The fluorine compound includes NaF. In detail, the fluorine compound may include NaF and AlF₃. That is, the glass frit may include all of NaF and AlF₃.

The fluorine compound can appropriately adjust the surface tension of a coating film formed by a glass composition. Further, the vitrification area of the glass frit can be increased by the fluorine compound.

NaF is included by about 1 wt% to 5 wt% of the entire glass frit.

When the fluorine compound is included in an amount of less than 1 wt% of the entire glass frit, the vitrification area is reduced and the glass structure may be deteriorated, so durability of a functional layer may be reduced. When the fluorine compound is included in an amount of more than about 5 wt% of the entire glass frit, the sintering temperature of the glass frit may be increased.

The glass frit may further include at least one of Co₃O₄, NiO, Fe₂O₃, and MnO₂. The glass frit may further include all of Co₃O₄, NiO, Fe₂O₃, and MnO₂.

Co₃O₄, NiO, Fe₂O₃, and MnO₂ can increase adhesion of the glass composition that is coated on a base material. That is, Co₃O₄, NiO, Fe₂O₃, and MnO₂ may be adhesion-reinforcing elements that improve adhesion when a glass composition is coated on a base material.

By Co₃O₄, NiO, Fe₂O₃, and MnO₂, adhesion can be improved even if the glass composition is directly coated on a base material without a specific buffer layer when the glass composition is disposed on the base material.

Accordingly, the entire thicknesses of the cavity and/or the door on which the glass composition is coated can be reduced, so the process efficiency can be improved.

At least one of Co₃O₄, NiO, Fe₂O₃, and MnO₂ may be included by 6 wt% or less of the entire glass frit. Preferably, at least one of Co₃O₄, NiO, Fe₂O₃, and MnO₂ may be included by 1 wt% to 6 wt% of the entire glass frit.

The present invention is described in more detail with respect to a method of producing glass frits according to examples not representing embodiments of the invention.

### Example 1

As shown in the following Table 1, a glass frit material was provided.

Na₂CO₃, K₂CO₃, Li₂CO₃ were used as the raw materials of Na₂O, K₂O, and Li₂O, CaCO₃ was used as the raw material of CaO, and the other elements were the same as those shown in Table 1.

The glass frit material was mixed, melted at about 1400°C for one to two hours, and then rapidly cooled by a quenching roller, thereby obtaining a glass cullet.

Organopolysiloxane in an amount of about 0.1 wt% to 1 wt% was put into the glass cullet, milled and pulverized by a ball mill for about 6 hours, and then put through a 325-mesh sieve to have a particle diameter of about 45 µm or less, thereby producing a glass frit.

The glass frit was sprayed to a low-carbon steel sheet of 200×200 (mm) and 1(mm) thickness by a corona discharge gun. The voltage of the discharge gun was controlled between 40 to 100 kV and the amount of the glass frit sprayed to the low-carbon steel sheet was 300 g/m².

A functional layer was formed on a side of the low-carbon steel by sintering the low-carbon steel sheet with the glass frit sprayed thereon at 700°C to 750°C for 300 to 450 seconds, and then adhesion of the functional layer was measured.

The adhesion test device was Dupont Impact Tester (ASTM D1794, JIS K5400), in which a sample was put on the center of a sample stage, a steel ball having a diameter of about 25.4mm (1 inch) was put on the center of the plane of the sample, and then a weight of 2kg was freely dropped from a height of 300mm, thereby examining the state of peeling.

The reference for determining adhesion levels was as follows.

### [Adhesion level]

Level 0 = No adhesion
Level 1 = Very low adhesion
Level 2 = Having adhesion
Level 3 = Good adhesion
Level 4 = High adhesion
Level 5 = Highest adhesion

Further, a pellet type specimen was sintered under the same condition as that for sintering the glass frit to measure thermal properties of glass, and both sides of the specimen was ground and then a Td (softening temperature) and a CTE (coefficient of thermal expansion) were measured at a temperature rising speed of 10°C/min by a TMA (Thermo Mechanical Analyzer).

### Example 2

As shown in Table 1, a functional layer was formed in the same way as Example 1 except that glass frit materials were provided as listed in the table. Adhesion, softening temperature, and a coefficient of thermal expansion of the functional layer were measured.

### Comparative example 1

As shown in Table 1, a functional layer was formed in the same way as Example 1 except that glass frit materials were provided. Adhesion, softening temperature, and a coefficient of thermal expansion of the functional layer were measured.

### Comparative example 2

As shown in Table 1, a functional layer was formed in the same way as Example 1 except that glass frit materials were provided as listed in the table. Adhesion, softening temperature, and a coefficient of thermal expansion of the functional layer were measured.

**[Table 1]**

| Component (wt%) | Example 1 | Example 2 | Comparative example 1 | Comparative example 2 |
|---|---|---|---|---|
| SiO₂ | 22.43 | 30.93 | 53.95 | 60.32 |
| B₂O₃ | 24.79 | 26.79 | 13.86 | 12.29 |
| Na₂O | 11.48 | 10.08 | 17.25 | 13.25 |
| K₂O | 5.8 | 7.7 | - | - |
| Li₂O | 2.26 | 1.86 | 1.0 | 1.8 |
| Al₂O₃ | 0.5 | - | - | 0.1 |
| ZrO₂ | - | - | 2.2 | 2.2 |
| TiO₂ | - | 1 | 2.1 | 2.2 |
| ZnO | 24.79 | 14.29 | - | - |
| CaO | - | - | 3.02 | 1.53 |
| NaF | 3.23 | 3.6 | 1.8 | 2.2 |
| Co₃O₄ | 3.74 | 2.42 | 1.3 | 1.6 |
| NiO | 1.48 | 2.3 | 2.31 | 1.3 |
| MnO₂ | - | - | 1.2 | 1.4 |

**[Table 2]**

| | Example 1 | Example 2 | Comparative example 1 | Comparative example 2 |
|---|---|---|---|---|
| Softening temperature (°C) | 491.22 | 512.29 | 564.3 | 593.1 |
| Coefficient of thermal expansion (× 10⁻⁷/°C) | 104.5 | 109.9 | 105.3 | 85.2 |

**[Table 3]**

| | Example 1 | Example 2 | Comparative example 1 | Comparative example 2 |
|---|---|---|---|---|
| Adhesion | 3∼4 | 3∼4 | 0 | 0 |

Referring to Table 2, it can be seen that the functional layers formed by the glass frits according to Examples have high softening temperature and coefficient of thermal expansion. That is, it can be seen that the functional layers of Examples have a softening temperature of about 500°C and a coefficient of thermal expansion of 100(× 10⁻⁷/°C) or more.

That is, it can be seen that the functional layers formed by the glass frits according to Examples have improved durability and chemical resistance.

Further, it can be seen that the functional layers formed by the glass frits according to Examples have improved adhesion.

That is, referring to Table 3, it can be seen that the glass frits according to Examples have improved adhesion on a low-carbon steel even at a sintering temperature of 700°C to 750°C.

The glass frits according to the invention may have a low sintering temperature when they are coated on a low-carbon steel sheet.

In detail, the glass frits according to the invention may be sintered at 700°C to 750°C e.g. after being spray-coated on a low-carbon steel sheet.

That is, the glass frits according to the invention can form a functional layer on a low-carbon steel sheet by being sintered at 700°C to 750°C and can have a coefficient of thermal expansion, a softening temperature, and adhesion similar to those of a functional layer that is coated in a high-temperature process.

Therefore, the glass frits according to the invention can be coated on a low-carbon steel sheet by sintering at a low temperature and the process temperature can be decreased, so the process efficiency can be improved. Further, differences relating to the changes and modifications should be construed as being included in the scope of the present invention which is determined by claims.

## Claims

1. A glass frit including SiO₂, B₂O₃, ZnO, an I-group oxide, and further including NaF,
wherein the SiO₂ is included by 15 wt% to 50 wt% of the entire glass frit,
the B₂O₃ is included by 10 wt% to 30 wt% of the entire glass frit,
the ZnO is included by 5 wt% to 35 wt% of the entire glass frit,
the I-group oxide is included by 10 wt% to 30 wt% of the entire glass frit, and includes Li₂O, Na₂O and K₂O,
the NaF is included by 1 wt% to 5 wt% of the entire glass frit,
wherein the glass frit further includes Al₂O₃, ZrO₂, and TiO₂, and
wherein the Al₂O₃, ZrO₂, and TiO₂ is included by 0.1 wt% to 5 wt% of the entire glass frit.

2. The glass frit of claim 1, wherein the glass frit further includes at least one of Co₃O₄, NiO, Fe₂O₃, and MnO₂, and
at least one of the Co₃O₄, NiO, Fe₂O₃, and MnO₂ is included by 1 wt% to 6 wt% of the entire glass frit.

3. A cooking appliance comprising:
a cavity having a cooking chamber;
a door selectively opening/closing the cooking chamber; and
at least one heating source providing heat for heating an object to be cooked in the cooking chamber,
wherein at least one of the cavity and the door includes a metallic base material and a functional layer on the metallic base material,
the metallic base material includes low-carbon steel,
the functional layer forms a glass frit including SiO₂, B₂O₃, ZnO, an I-group oxide, and further including NaF,
the SiO₂ is included by 15 wt% to 50 wt% of the entire glass frit,
the B₂O₃ is included by 10 wt% to 30 wt% of the entire glass frit,
the ZnO is included by 5 wt% to 35 wt% of the entire glass frit,
the I-group oxide is included by 10 wt% to 30 wt% of the entire glass frit, and includes Li₂O, Na₂O and K₂O,
the NaF is included by 1 wt% to 5 wt% of the entire glass frit,
wherein the glass frit further includes Al₂O₃, ZrO₂, and TiO₂, and
wherein the Al₂O₃, ZrO₂, and TiO₂ is included by 0.1 wt% to 5 wt% of the entire glass frit.

4. The cooking appliance of claim 3, wherein the glass frit further includes at least one of Co₃O₄, NiO, Fe₂O₃, and MnO₂,and
at least one of the Co₃O₄, NiO, Fe₂O₃, and MnO₂ is included by 1 wt% to 6 wt% of the entire glass frit.

5. A method of forming a coating layer, the method comprising:
providing a glass frit material including SiO₂, B₂O₃, ZnO, an I-group oxide, and further including NaF;
melting the glass frit material;
forming a glass frit by quenching the molten glass frit material;
coating the glass frit on a low-carbon steel sheet; and
sintering the glass frit,
wherein the glass frit is sintered at 700°C to 750°C,
the SiO₂ is included by 15 wt% to 50 wt% of the entire glass frit,
the B₂O₃ is included by 10 wt% to 30 wt% of the entire glass frit,
the ZnO is included by 5 wt% to 35 wt% of the entire glass frit,
the I-group oxide is included by 10 wt% to 30 wt% of the entire glass frit, and includes Li₂O, Na₂O and K₂O, the NaF is included by 1 wt% to 5 wt% of the entire glass frit,
wherein the glass frit further includes Al₂O₃, ZrO₂, and TiO₂, and
wherein the Al₂O₃, ZrO₂, and TiO₂ is included by 0.1 wt% to 5 wt% of the entire glass frit.

6. The method of claim 5, wherein the glass frit further includes at least one of Co₃O₄, NiO, Fe₂O₃, and MnO₂, and
at least one of the Co₃O₄, NiO, Fe₂O₃, and MnO₂ is included by 1 wt% to 6 wt% of the entire glass frit.

## Patentansprüche

1. Eine Glasfritte, enthaltend SiO₂, B₂O₃, ZnO, ein Oxid der Gruppe I und ferner enthaltend NaF,
wobei das SiO₂ zu 15 Gew.-% bis 50 Gew.-% der gesamten Glasfritte enthalten ist,
das B₂O₃ zu 10 Gew.-% bis 30 Gew.-% der gesamten Glasfritte enthalten ist,
das ZnO zu 5 Gew.-% bis 35 Gew.-% der gesamten Glasfritte enthalten ist,
das Oxid der Gruppe I zu 10 Gew.-% bis 30 Gew.-% der gesamten Glasfritte enthalten ist und Li₂O, Na₂O und K₂O beinhaltet,
das NaF zu 1 Gew.-% bis 5 Gew.-% der gesamten Glasfritte enthalten ist,
wobei die Glasfritte ferner Al₂O₃, ZrO₂ und TiO₂ enthält, und
wobei das Al₂O₃, ZrO₂ und TiO₂ zu 0,1 Gew.-% bis 5 Gew.-% der gesamten Glasfritte enthalten ist.

2. Die Glasfritte nach Anspruch 1, wobei die Glasfritte ferner mindestens eines aus Co₃O₄, NiO, Fe₂O₃ und MnO₂ enthält und
mindestens eines aus Co₃O₄, NiO, Fe₂O₃ und MnO₂ zu 1 Gew.-% bis 6 Gew.-% der gesamten Glasfritte enthalten ist.

3. Ein Kochgerät, umfassend:
einen Hohlraum mit einer Garkammer;
eine Tür, die die Garkammer wahlweise öffnet/schließt; und
mindestens eine Heizquelle, die Wärme zum Erhitzen eines zu garenden Gegenstandes in der Garkammer bereitstellt,
wobei mindestens eines aus dem Hohlraum und der Tür ein metallisches Basismaterial und eine Funktionsschicht auf dem metallischen Basismaterial enthält,
das metallische Basismaterial kohlenstoffarmen Stahl enthält,
die Funktionsschicht eine Glasfritte bildet, die SiO₂, B₂O₃, ZnO, ein Oxid der Gruppe I enthält und ferner NaF enthält,
das SiO₂ zu 15 Gew.-% bis 50 Gew.-% der gesamten Glasfritte enthalten ist,
das B₂O₃ zu 10 Gew.-% bis 30 Gew.-% der gesamten Glasfritte enthalten ist,
das ZnO zu 5 Gew.-% bis 35 Gew.-% der gesamten Glasfritte enthalten ist,
das Oxid der Gruppe I zu 10 Gew.-% bis 30 Gew.-% der gesamten Glasfritte enthalten ist und Li₂O, Na₂O und K₂O beinhaltet,
das NaF zu 1 Gew.-% bis 5 Gew.-% der gesamten Glasfritte enthalten ist,
wobei die Glasfritte ferner Al₂O₃, ZrO₂ und TiO₂ enthält und
wobei das Al₂O₃, ZrO₂ und TiO₂ zu 0,1 Gew.-% bis 5 Gew.-% der gesamten Glasfritte enthalten ist.

4. Das Kochgerät nach Anspruch 3, wobei die Glasfritte ferner mindestens eines aus Co₃O₄, NiO, Fe₂O₃ und MnO₂ enthält und
mindestens eines aus Co₃O₄, NiO, Fe₂O₃ und MnO₂ zu 1 Gew.-% bis 6 Gew.-% der gesamten Glasfritte enthalten ist.

5. Ein Verfahren zum Bilden einer Überzugsschicht, wobei das Verfahren umfasst:
Bereitstellen eines Glasfrittenmaterials, das SiO₂, B₂O₃, ZnO, ein Oxid der Gruppe I enthält und ferner NaF enthält;
Schmelzen des Glasfrittenmaterials;
Bilden einer Glasfritte durch Abschrecken des geschmolzenen Glasfrittenmaterials;
Aufbringen der Glasfritte auf ein kohlenstoffarmes Stahlblech; und
Sintern der Glasfritte,
wobei die Glasfritte bei 700°C bis 750°C gesintert wird,
das SiO₂ zu 15 Gew.-% bis 50 Gew.-% der gesamten Glasfritte enthalten ist,
das B₂O₃ zu 10 Gew.-% bis 30 Gew.-% der gesamten Glasfritte enthalten ist,
das ZnO zu 5 Gew.-% bis 35 Gew.-% der gesamten Glasfritte enthalten ist,
das Oxid der Gruppe I zu 10 Gew.-% bis 30 Gew.-% der gesamten Glasfritte enthalten ist und Li₂O, Na₂O und K₂O beinhaltet,
das NaF zu 1 Gew.-% bis 5 Gew.-% der gesamten Glasfritte enthalten ist,
wobei die Glasfritte ferner Al₂O₃, ZrO₂ und TiO₂ enthält und
wobei das Al₂O₃, ZrO₂ und TiO₂ zu 0,1 Gew.-% bis 5 Gew.-% der gesamten Glasfritte enthalten ist.

6. Das Verfahren nach Anspruch 5, wobei die Glasfritte ferner mindestens eines aus Co₃O₄, NiO, Fe₂O₃ und MnO₂ enthält und
mindestens eines aus Co₃O₄, NiO, Fe₂O₃ und MnO₂ zu 1 Gew.-% bis 6 Gew.-% der gesamten Glasfritte enthalten ist.

## Revendications

1. Fritte de verre contenant SiO₂, B₂O₃, ZnO, un oxyde du groupe I, et contenant en outre NaF, dans laquelle
le SiO₂ est présent à raison de 15 % en poids à 50 % en poids de la fritte de verre totale,
le B₂O₃ est présent à raison de 10 % en poids à 30 % en poids de la fritte de verre totale,
le ZnO est présent à raison de 5 % en poids à 35 % en poids de la fritte de verre totale,
l'oxyde du groupe I est présent à raison de 10 % en poids à 30 % en poids de la fritte de verre totale, et contient Li₂O, Na₂O et K₂O,
le NaF est présent à raison de 1 % en poids à 5 % en poids de la fritte de verre totale, laquelle fritte de verre contient en outre Al₂O₃, ZrO₂ et TiO₂, et
dans laquelle les Al₂O₃, ZrO₂ et TiO₂ sont présents à raison de 0,1 % en poids à 5 % en poids de la fritte de verre totale.

2. Fritte de verre selon la revendication 1, laquelle fritte de verre contient en outre au moins l'un parmi Co₃O₄, NiO, Fe₂O₃ et MnO₂, et
au moins l'un parmi les Co₃O₄, NiO, Fe₂O₃ et MnO₂ est présent à raison de 1 % en poids à 6 % en poids de la fritte de verre totale.

3. Appareil de cuisson comprenant :
une cavité ayant une chambre de cuisson ;
une porte ouvrant/fermant sélectivement la chambre de cuisson ; et
au moins une source de chauffage fournissant de la chaleur pour chauffer un objet devant être cuit dans la chambre de cuisson,
dans lequel au moins l'une parmi la cavité et la porte contient un matériau de base métallique et une couche fonctionnelle sur le matériau de base métallique,
le matériau de base métallique contient un acier à faible teneur en carbone,
la couche fonctionnelle forme une fritte de verre contenant SiO₂, B₂O₃, ZnO, un oxyde du groupe I, et contenant en outre NaF,
le SiO₂ est présent à raison de 15 % en poids à 50 % en poids de la fritte de verre totale,
le B₂O₃ est présent à raison de 10 % en poids à 30 % en poids de la fritte de verre totale,
le ZnO est présent à raison de 5 % en poids à 35 % en poids de la fritte de verre totale,
l'oxyde du groupe I est présent à raison de 10 % en poids à 30 % en poids de la fritte de verre totale, et comprend Li₂O, Na₂O et K₂O,
le NaF est présent à raison de 1 % en poids à 5 % en poids de la fritte de verre totale,
dans lequel la fritte de verre contient en outre Al₂O₃, ZrO₂ et TiO₂, et
dans lequel les Al₂O₃, ZrO₂ et TiO₂ sont présents à raison de 0,1 % en poids à 5 % en poids de la fritte de verre totale.

4. Appareil de cuisson selon la revendication 3, dans lequel la fritte de verre contient en outre au moins l'un parmi Co₃O₄, NiO, Fe₂O₃ et MnO₂,et
au moins l'un parmi les Co₃O₄, NiO, Fe₂O₃ et MnO₂ est présent à raison de 1 % en poids à 6 % en poids de la fritte de verre totale.

5. Méthode de formation d'une couche de revêtement, la méthode comprenant :
la fourniture d'un matériau de fritte de verre contenant SiO₂, B₂O₃, ZnO, un oxyde du groupe I, et contenant en outre NaF ;
la fusion du matériau de fritte de verre ;
la formation d'une fritte de verre par trempe du matériau de fritte de verre fondu ;
le dépôt sous forme de revêtement de la fritte de verre sur une tôle en acier à faible teneur en carbone ; et
le frittage de la fritte de verre,
dans laquelle la fritte de verre est frittée à une température de 700 °C à 750 °C,
le SiO₂ est présent à raison de 15 % en poids à 50 % en poids de la fritte de verre totale,
le B₂O₃ est présent à raison de 10 % en poids à 30 % en poids de la fritte de verre totale,
le ZnO est présent à raison de 5 % en poids à 35 % en poids de la fritte de verre totale,
l'oxyde du groupe 1 est présent à raison de 10 % en poids à 30 % en poids de la fritte de verre totale, et comprend Li₂O, Na₂O et K₂O,
le NaF est présent à raison de 1 % en poids à 5 % en poids de la fritte de verre totale,
dans laquelle la fritte de verre contient en outre Al₂O₃, ZrO₂ et TiO₂, et
dans laquelle les Al₂O₃, ZrO₂ et TiO₂ sont présents à raison de 0,1 % en poids à 5 % en poids de la fritte de verre totale.

6. Méthode selon la revendication 5, dans laquelle la fritte de verre contient en outre au moins l'un parmi Co₃O₄, NiO, Fe₂O₃ et MnO₂,et
au moins l'un parmi les Co₃O₄, NiO, Fe₂O₃ et MnO₂ est présent à raison de 1 % en poids à 6 % en poids de la fritte de verre totale.
